# EUROPEAN PATENT SPECIFICATION

(11) **EP 3 249 570 B1**
(45) Date of publication and mention of the grant of the patent: **10.04.2019**
(21) Application number: 16193956.6
(22) Date of filing: 14.10.2016
(51) Int. Cl.: G06F 21/32, H04W 12/06, H04W 12/08, G06F 21/70, G06F 21/88

(54) **METHOD AND DEVICE FOR PROVIDING PROMPT INDICATING LOSS OF TERMINAL**
VERFAHREN UND VORRICHTUNG ZUR BEREITSTELLUNG DER SOFORTIGEN ANZEIGE DES VERLUSTS EINES ENDGERÄTS
PROCÉDÉ ET DISPOSITIF DESTINÉS À FOURNIR UNE INDICATION RAPIDE DE PERTE DU TERMINAL

(30) Priority: 24.05.2016 CN 201610346314
(43) Date of publication of application: 29.11.2017
(73) Proprietor: Beijing Xiaomi Mobile Software Co., Ltd., Beijing 100085 (CN)
(72) Inventor: LIU, Daokuan, Beijing 100085 (CN); YANG, Chunhe, Beijing 100085 (CN); TANG, Yao, Beijing 100085 (CN); LIU, Shuai, Beijing 100085 (CN); XING, Xinyan, Beijing 100085 (CN)
(74) Representative: Hughes, Andrea Michelle

(56) References cited:
- CN-A- 105 050 061
- US-A1- 2014 273 880

## Description

### FIELD

The present disclosure relates to the communication technology field, and more particularly relates to a method and a device for providing a prompt indicating a loss of a terminal.

### BACKGROUND

With the development of modern communication technology and the increasing of people's living standard, a smart phone has various functions, such as making a call, sending a message, shopping and booking a ticket, etc. Meanwhile, typically, there is a lot of important information such as contact phone number, content of messages, various accounts and passwords and other information stored in the smart phone.

However, since the smart phone is expensive at present, it becomes a target in eyes of thieves. Recently, the phenomena that the smart phone is stolen becomes common, many users share an experience that the smart phone is stolen by thief. The user's smart phone being stolen will cause trouble or even bring enormous economic losses to the user.

CN105050061 describes a method and device for sending messages on the basis of user voiceprint information. US 2014/0273880 describes a computer-implemented method in a programmed mobile device.

### SUMMARY

According to a first aspect of embodiments of the present disclosure, a method for providing a prompt indicating a loss of a terminal is provided. The method includes:
obtaining a matching relation between first feature information of a current user of a target terminal and second feature information of a predetermined user; and
controlling a related terminal associated with the target terminal to output a loss prompt in response to determining that the matching relation indicates that the first feature information and the second feature information do not match, wherein the loss prompt indicates a loss of the target terminal.

Obtaining a matching relation between first feature information of a current user of a target terminal and second feature information of a predetermined user may include:
receiving the first feature information sent by the target terminal;
obtaining the second feature information; and
obtaining the matching relation by comparing the first feature information with the second feature information.

Obtaining a matching relation between first feature information of a current user of a target terminal and second feature information of a predetermined user may include:
receiving the matching relation sent by the target terminal.

The matching relation may indicate that the first feature information and the second feature information do not match, if the second feature information does not include the first feature information.

Controlling a related terminal associated with the target terminal to output a loss prompt may include:
obtaining an identifier of the related terminal from a related database, in which the related database includes a correspondence between an identifier of the target terminal and the identifier of the related terminal; and
controlling the related terminal corresponding to the identifier of the related terminal to output the loss prompt.

The related terminal may include: a terminal on which a target account is logged in, in which the target account is the same as a logged-in account on the target terminal or an account associated with the logged-in account on the target terminal.

The loss prompt may include at least one of: current location information of the target terminal and facial feature information of the current user.

The first feature information may include at least one of: fingerprint feature information, iris feature information and voice feature information of the current user; and the second feature information includes at least one of: fingerprint feature information, iris feature information and voice feature information of the predetermined user.

The method may further include:
controlling the target terminal to enable a current logged-in account to be logged out, in response to determining that the matching relation indicates that the first feature information and the second feature information do not match.

According to a second aspect of embodiments of the present disclosure, a device for providing a prompt indicating a loss of a terminal is provided. The device includes:
an obtaining module, configured to obtain a matching relation between first feature information of a current user of a target terminal and second feature information of a predetermined user; and
a first control module, configured to control a related terminal associated with the target terminal to output a loss prompt in response to determining that the matching relation obtained by the obtaining module indicates that the first feature information and the second feature information do not match, in which the loss prompt indicates a loss of the target terminal.

The obtaining module may include:
a first receiving unit, configured to receive the first feature information sent by the target terminal;
a first obtaining unit, configured to obtain the second feature information; and
a forming unit, configured to obtain the matching relation by comparing the first feature information received by the first receiving unit with the second feature information obtained by the first obtaining unit.

The obtaining module may include:
a second receiving unit, configured to receive the matching relation sent by the target terminal.

The matching relation may indicate that the first feature information and the second feature information do not match, if the second feature information obtained by the first obtaining unit does not include the first feature information received by the first receiving unit.

The first control module may include:
a second obtaining unit, configured to obtain an identifier of the related terminal from a related database, in which the related database includes a correspondence between an identifier of the target terminal and the identifier of the related terminal; and
a control unit, configured to control the related terminal corresponding to the identifier of the related terminal obtained by the second obtaining unit to output the loss prompt.

The related terminal mayinclude: a terminal on which a target account is logged in, in which the target account is the same as a logged-in account on the target terminal or an account associated with the logged-in account on the target terminal.

The loss prompt may include at least one of: current location information of the target terminal and facial feature information of the current user.

The first feature information may include at least one of: fingerprint feature information, iris feature information and voice feature information of the current user; and the second feature information includes at least one of: fingerprint feature information, iris feature information and voice feature information of the predetermined user.

The device may further include:
a second control module, configured to control the target terminal to enable a current logged-in account to be logged out, in response to determining that the matching relation indicates that the first feature information and the second feature information do not match.

According to a third aspect of embodiments of the present disclosure, a server is provided, including:
a processor;
a memory for storing executable instruction of the processor;
the processor is configured to perform the method for providing a prompt indicating a loss of a terminal according to the first aspect of embodiments of the present disclosure.

According to a fourth aspect of embodiments of the present disclosure, a computer-readable storage medium is provided. The computer-readable storage medium has stored therein instructions that, when executed by a processor of a device, causes the device to perform the method for providing a prompt indicating a loss of a terminal according to the first aspect of embodiments of the present disclosure.

The technical solution according to embodiments of the present disclosure may include the following advantageous effects.

In embodiments of the present disclosure, the matching relation between the feature information of the current user of the target terminal and the feature information of the predetermined user of the target terminal is obtained, and in response to determining that the matching relation indicates a mismatching, the related terminal of the target terminal is controlled to output the loss prompt. With the method according to embodiments of the present disclosure, if the server determines that the current user is different from the predetermined user of the target terminal, it indicates that the target terminal may be lost, and it is necessary to control the related terminal of the target terminal to output the loss prompt so as to enable the owner of the target terminal to know the loss of the target terminal in time through the loss prompt outputted by the related terminal and to take corresponding actions as soon as possible, such as calling the police, finding the target terminal at once or modifying a password of a bank account stored in the target terminal at once or the like, such that more economic losses brought to the owner of the target terminal due to the loss of the target terminal may be avoided even though the target terminal is lost.

It should be understood that the above general descriptions and the following detail descriptions are explanatory and illustrative, and these descriptions shall not be construed to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart of a method for providing a prompt indicating a loss of a terminal according to an example embodiment of the present disclosure;
Fig. 2 is a flow chart of a method for providing a prompt indicating a loss of a terminal according to an example embodiment of the present disclosure;
Fig. 3 is a flow chart of a method for providing a prompt indicating a loss of a terminal according to an example embodiment of the present disclosure;
Fig. 4 is a flow chart of a method for providing a prompt indicating a loss of a terminal according to an example embodiment of the present disclosure;
Fig. 5 is a block diagram of a device for providing a prompt indicating a loss of a terminal according to an example embodiment of the present disclosure;
Fig. 6 is a block diagram of a device for providing a prompt indicating a loss of a terminal according to an example embodiment of the present disclosure;
Fig. 7 is a block diagram of a device for providing a prompt indicating a loss of a terminal according to an example embodiment of the present disclosure; and
Fig. 8 is a block diagram of a server according to an example embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of devices and methods consistent with aspects related to the disclosure as recited in the appended claims.

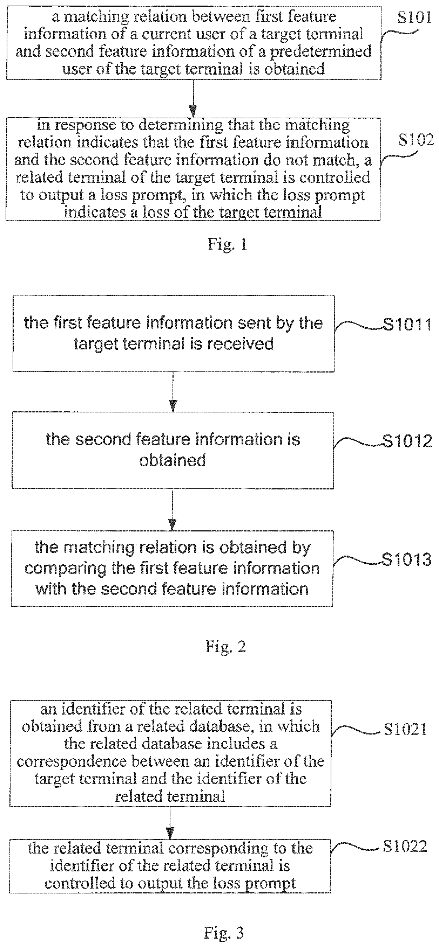

Fig. 1 is a flow chart of a method for providing a prompt indicating a loss of a terminal according to an embodiment of the present disclosure. As shown in Fig. 1, the method may be applied in a server, and include the following acts.

At block S101, a matching relation between first feature information of a current user of a target terminal and second feature information of a predetermined user of the target terminal is obtained.

In embodiments of the present disclosure, the target terminal may be a mobile phone, a tablet PC, or a smart band, etc.

The owner of the target terminal may lose the target terminal sometimes, for example, the target terminal is stolen by a lawbreaker, or the owner of the target terminal may leave the target terminal in some place, etc. After the target terminal is lost, in order to avoid more economic losses brought to the owner of the target terminal due to the loss of the target terminal in the case that the target terminal is lost, it is required to timely prompt the owner of the target terminal that the target terminal is lost, such that the owner of the target terminal may know the loss of target terminal in time and take corresponding actions as soon as possible, for example, calling the police, finding the target terminal at once, modifying a password of a logged-in bank account on the target terminal at once, or the like.

In embodiments of the present disclosure, the server needs to obtain the matching relation between the first feature information of the current user of the target terminal and the second feature information of the predetermined user of the target terminal in real time, or periodically or regularly, and then determines whether the first feature information is the same as the second feature information according to the matching relation, and executes act S102 if the first feature information is different from the second feature information.

In embodiments of the present disclosure, the first feature information includes at least one of: fingerprint feature information, iris feature information and voice feature information of the current user and the like. The second feature information includes at least one of: fingerprint feature information, iris feature information and voice feature information of the predetermined user and the like. Different people have different feature information.

For example, the voice feature information may be timbre of voice when a person is talking; different persons have different timbre when talking. The fingerprint feature information may a fingerprint image of a person; different persons have different fingerprint images. And the feature information may be an iris image of a person, which is distinct for different persons.

In embodiments of the present disclosure, the matching relation between the first feature information of the current user of the target terminal and the second feature information of the predetermined user of the target terminal may be obtained by the following two ways.

One way, referring to Fig. 2, acts S1011-S1013 are included.

At block S1011, the first feature information sent by the target terminal is received.

The server may send an obtaining request for obtaining the first feature information of the current user of the target terminal to the target terminal. After receiving the obtaining request, the target terminal obtains the first feature information and then sends the first feature information to the server. The server receives the first feature information sent by the target terminal.

When the current user of the target terminal is calling somebody with the target terminal, the target terminal may obtain the voice when the current user of the target terminal is talking, and obtain the timbre of the voice as the first feature information. Alternatively, if the screen of the target terminal is in a locked state and the current user of the target terminal needs to unlock the screen of the target terminal, the current user of the target terminal may unlock the screen by making use of a fingerprint, i.e., the current user touches a fingerprint recognition area of the target terminal with a finger. When the current user touches the fingerprint recognition area with a finger, the target terminal may obtain the fingerprint image of the current user as the first feature information.

At block S1012, the second feature information is obtained.

In embodiments of the present disclosure, the predetermined user of the target terminal includes the owner of the target terminal.

In embodiments of the present disclosure, the predetermined user of the target terminal may store his own feature information into the server in advance. Thus, in this act, the server may directly obtain the second feature information of the predetermined user of the target terminal locally.

For example, the predetermined user of the target terminal may compose an identifier of the target terminal and his own feature information into a record and store this record into an association between an identifier of a terminal and feature information stored in the server. Then, in this act, the server may obtain the associating between identifiers of terminals and feature information stored in local, and search for the feature information corresponding to the identifier of the target terminal as the second feature information in the associations between identifiers of terminals and feature information.

At block S1013, the matching relation is obtained by comparing the first feature information with the second feature information.

In embodiments of the present disclosure, in act S1012, a piece of second feature information or a plurality of pieces of second feature information may be obtained.

If a piece of second feature information is obtained, in this act, the server may compare whether the first feature information is the same as the second feature information. If the first feature information is different from the second feature information, a matching relation indicating that the first feature information and the second feature information do not match is generated. If the first feature information is the same as the second feature information, a matching relation indicating that the first feature information matches with the second feature information is generated.

If a plurality of pieces of second feature information are obtained, the server may determine whether the first feature information is contained in the plurality of pieces of second feature information. If the first feature information is not contained in the plurality of pieces of second feature information, a matching relation indicating that the first feature information and the second feature information do not match is generated. If the first feature information is contained in the plurality of pieces of second feature information, a matching relation indicating that the first feature information matches with the second feature information is generated.

### Second Way

The server may send an obtaining request for obtaining the matching relation between the first feature information of the current user of the target terminal and the second feature information of the predetermined user of the target terminal. After receiving the obtaining request, the target terminal may obtain the first feature information of the current user of the target terminal.

When the current user of the target terminal is calling somebody with the target terminal, the target terminal may obtain the voice when the current user of the target terminal is talking, and obtain the timbre of the voice as the first feature information. Alternatively, if the screen of the target terminal is in a locked state and the current user of the target terminal needs to unlock the screen of the target terminal, the current user of the target terminal may unlock the screen by making use of fingerprint, i.e., the current user touches a fingerprint recognition area of the target terminal with a finger. When the current user touches the fingerprint recognition area with a finger, the target terminal may obtain the fingerprint image of the current user as the first feature information.

In embodiments of the present disclosure, the predetermined user of the target terminal may store his own feature information into the target terminal in advance. Thus, in this act, the target terminal may directly obtain the second feature information of the predetermined user of the target terminal locally.

For example, the predetermined user of the target terminal may compose an identifier of the target terminal and his own feature information into a record and store this record into an association between an identifier of a terminal and feature information stored in the target terminal. Then, in this act, the target terminal may obtain the associations between identifiers of terminals and feature information stored in local, and search for the feature information corresponding to the identifier of the target terminal as the second feature information in the associations between identifiers of terminals and feature information.

The target terminal may obtain a piece of second feature information or a plurality of pieces of second feature information.

If a piece of second feature information is obtained, in this act, the target terminal may compare whether the first feature information is the same as the second feature information. If the first feature information is different from the second feature information, a matching relation indicating that the first feature information and the second feature information do not match is generated. If the first feature information is the same as the second feature information, a matching relation indicating that the first feature information matches with the second feature information is generated.

If a plurality of pieces of second feature information are obtained, the target terminal may determine whether the first feature information is contained in the plurality of pieces of second feature information. If the first feature information is not contained in the plurality of pieces of second feature information, a matching relation indicating that the first feature information and the second feature information do not match is generated. If the first feature information is contained in the plurality of pieces of second feature information, a matching relation indicating that the first feature information matches with the second feature information is generated.

After generating the matching relation, the target terminal sends the matching relation to the server. The server receives the matching relation sent by the target terminal.

At block 102, in response to determining that the matching relation indicates that the first feature information and the second feature information do not match, a related terminal of the target terminal is controlled to output a loss prompt, in which the loss prompt indicates a loss of the target terminal.

If the matching relation indicates that the first feature information and the second feature information do not match, the owner of the target terminal may lose the target terminal, for example, the target terminal is stolen by a lawbreaker, or the owner leaves the target terminal in some place, etc.

Referring Fig. 3, this act may be implemented through the following procedures S1021-S1022.

At block S1021, an identifier of the related terminal is obtained from a related database, in which the related database includes an association between an identifier of the target terminal and the identifier of the related terminal.

The related terminal may be a mobile phone, a tablet PC or a smart band, etc.

The related terminal may be another terminal belonging to the owner, or a terminal belonging to somebody who is trusted in by the owner of the target terminal, such as a terminal belonging to a partner, child, parent of the owner, etc.

The related terminal may include: a terminal on which a target account is logged in, in which the target account is the same as a logged-in account on the target terminal or an account associated with the logged-in account on the target terminal.

The target account is an account of the owner of the target terminal, such as a bank account or telephone number of the owner of the target terminal, etc. The owner of the target terminal may preset a related account of the target account in the server. For example, if the target account is the telephone number of the target terminal, the related account may be a telephone number set by the owner to be bound to the telephone number, such as a family number, etc.

In embodiments of the present disclosure, the owner of the target terminal may preset an identifier of the related terminal of the target terminal in the related database. For example, a correspondence between the identifier of the target terminal and the identifier of the related terminal is generated, and the generated correspondence is stored in the related database. The related database may be in the server or in another device. If the related database is in the server, in this act, the server may obtain the related database from local. If the related database is in another device, then in this act, the server may obtain the related database from the another device.

After obtaining the related database, the server may obtain the correspondence between the identifier of the target terminal and that of the related terminal from the related database, and then obtain the identifier of the related terminal from the correspondence.

At block S1022, the related terminal corresponding to the identifier of the related terminal is controlled to output the loss prompt.

The sever sends a loss prompt instruction to the related terminal corresponding to the identifier of the related terminal. The loss prompt instruction is configured for indicating to the related terminal to output the loss prompt. The loss prompt instruction may carry the identifier of the target terminal.

After receiving the loss prompt instruction, the related terminal may extract the identifier of the target terminal from the loss prompt instruction, and outputs the loss prompt according to the identifier of the target terminal and current location information of the target terminal. The loss prompt is configured for indicating the loss of target terminal.

Text or voice may be used for indicating the loss of the target terminal. For example, the related terminal displays text showing that the target terminal corresponding to the identifier of the target terminal is lost on a screen of the related terminal, or broadcasts voice indicating that the target terminal corresponding to the identifier of the target terminal is lost, such that the owner of the target terminal may take corresponding actions as soon as possible after knowing the loss prompt sent by the related terminal, for example, calling the police, finding the target terminal at once or modifying a password of a bank account stored in the target terminal at once or the like, such that more economic losses brought to the owner of the target terminal due to the loss of the target terminal may be avoided in the case that the target terminal is lost.

In another embodiment of the present disclosure, the loss prompt indicates at least one of current location information of the target terminal and facial feature information of the current user.

The server may send an obtaining request for obtaining the current location information of the target terminal. After receiving the obtaining request, the target terminal may locate the target terminal using a locating device built into the target terminal so as to obtain the current location information of the target terminal, and send the current location information to the server. The server receives the current location information of the target terminal sent by the target terminal.

The server may also send an obtaining request for obtaining the facial feature information of the current user. After receiving the obtaining request, the target terminal may capture the facial feature information of the current user using a camera installed on the target terminal (for example, photographing a picture of the face of the current user), and send the captured facial feature information of the current user to the server. The server receives the facial feature information of the current user sent by the target terminal.

In this way, the related terminal may also output the current location information of the target terminal and the facial feature information of the current user and so on when outputting the loss prompt. Thus, when the owner of the target terminal knows that the target terminal is lost through the loss prompt outputted by the related terminal, the owner may also know the current location information of the target terminal and the facial feature information of the current user, etc. The owner may find the target terminal according to the current location information of the target terminal and the facial feature information of the current user or the like, so as to improve efficiency.

Further, if an account (such as a telephone number or a bank account etc.) of the owner of the terminal target is logged in on the target terminal, in order to prevent the property of the owner from being damaged, after act S102, the server controls the target terminal to enable the target terminal to log out the logged-in account. In this way, the current user of the target terminal cannot use the account currently logged-in to conduct illegal acts, thus preventing the property of the owner from being damaged.

In embodiments of the present disclosure, the matching relation between the feature information of the current user of the target terminal and the feature information of the predetermined user of the target terminal is obtained, and in response to determining that the matching relation indicates a mismatching, the related terminal of the target terminal is controlled to output the loss prompt. With the method according to embodiments of the present disclosure, if the server determines that the current user is different from the predetermined user of the target terminal, it indicates that the target terminal may be lost, and it is necessary to control the related terminal of the target terminal to output the loss prompt so as to enable the owner of the target terminal to know the loss of the target terminal in time through the loss prompt outputted by the related terminal and to take corresponding actions as soon as possible, such as calling the police, finding the target terminal at once or modifying a password of a bank account stored in the target terminal at once or the like, such that more economic losses brought to the owner of the target terminal due to the loss of the target terminal may be avoided even though the target terminal is lost.

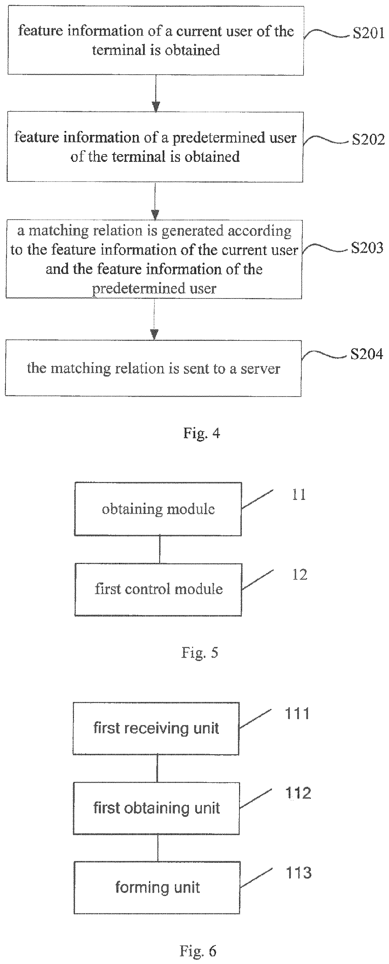

Fig. 4 is a flow chart of a method for providing a prompt indicating a loss of a terminal according to an embodiment of the present disclosure. As shown in Fig. 4, the method is applied in a terminal, and includes following acts.

At block S201, feature information of a current user of the terminal is obtained.

When the server needs to obtain a matching relation between the feature information of the current user of the terminal and feature information of a predetermined user of the terminal, the server may send an obtaining request for obtaining the matching relation between the feature information of the current user of the terminal and the feature information of the predetermined user of the terminal. After receiving the obtaining request, the terminal obtains the feature information of the current user of the terminal.

When the current user of the terminal is calling somebody with the terminal, the terminal may obtain voice when the current user of the terminal is talking, and obtain timbre of the voice as the feature information of the current user of the terminal. Alternatively, if a screen of the terminal is in a locked state and the current user of the terminal needs to unlock the screen of the terminal, the current user of the terminal may unlock the screen by making use of a fingerprint, i.e., the current user touches a fingerprint recognition area of the terminal with a finger. When the current user touches the fingerprint recognition area with the finger, the terminal may obtain a fingerprint image of the current user as the feature information of the current user of the terminal.

At block S202, feature information of the predetermined user of the terminal is obtained.

In embodiments of the present disclosure, the predetermined user of the terminal includes the owner of the terminal.

In embodiments of the present disclosure, the predetermined user of the terminal may store his own feature information into the terminal in advance. Thus, in this act, the terminal may directly obtain the feature information of the predetermined user of the terminal from local.

For example, the predetermined user of the terminal may compose an identifier of the terminal and his own feature information into a record and store this record into an association between an identifier of a terminal and feature information stored in the terminal. Then, in this act, the terminal may obtain the associations between identifiers of terminals and feature information stored in local, and search for the feature information corresponding to the identifier of the terminal as the feature information of the predetermined user of the terminal in the associations between identifiers of terminals and feature information.

At block S203, a matching relation is generated according to the feature information of the current user and the feature information of the predetermined user.

After obtaining the feature information of the current user of the terminal and obtaining the feature information of the predetermined user of the terminal, the terminal may generate the matching relation according to the feature information of the current user of the terminal and the feature information of the predetermined user of the terminal, and then execute act S204.

At block S204, the matching relation is sent to a server.

In embodiments of the present disclosure, after obtaining the matching relation between the feature information of the current user of the terminal and the feature information of the predetermined user of the terminal, the server controls a related terminal of the terminal to output a loss prompt in response to determining that the matching relation indicates a mismatching. With the method according to the present disclosure, if the server determines that the current user of the terminal is different from the predetermined user of the terminal, it indicates that the terminal may be lost, and it is necessary to control the related terminal of the terminal to output the loss prompt so as to enable the owner of the terminal to know the loss of the terminal in time through the loss prompt outputted by the related terminal and to take corresponding actions as soon as possible, such as calling the police, finding the terminal at once or modifying a password of a bank account stored in the terminal at once or the like, such that more economic losses brought to the owner of the terminal due to the loss of the terminal may be avoided in the case that the terminal is lost.

The implementations used herein do not depart from the scope of the claims.

Fig. 5 is a block diagram of a device for providing a prompt indicating a loss of a terminal according to an embodiment of the present disclosure. As shown in Fig. 5, the device is applied in a server, and includes an obtaining module 11 and a first control module 12.

The obtaining module 11 is configured to obtain a matching relation between first feature information of a current user of a target terminal and second feature information of a predetermined user.

The first control module 12 is configured to control a related terminal associated with the target terminal to output a loss prompt in response to determining that the matching relation obtained by the obtaining module 11 indicates that the first feature information and the second feature information do not match, in which the loss prompt indicates a loss of the target terminal.

Referring to Fig. 6, the obtaining module 11 includes a first receiving unit 111, a first obtaining unit 112 and a forming unit 113.

The first receiving unit 111 is configured to receive the first feature information sent by the target terminal.

The first obtaining unit 112 is configured to obtain the second feature information.

The forming unit 113 is configured to obtain the matching relation by comparing the first feature information received by the first receiving unit 111 with the second feature information obtained by the first obtaining unit 112.

The obtaining module 11 includes a second receiving unit.

The second receiving unit is configured to receive the matching relation sent by the target terminal.

The matching relation indicates that the first feature information and the second feature information do not match, if the second feature information obtained by the first obtaining unit 112 does not include the first feature information received by the first receiving unit 111.

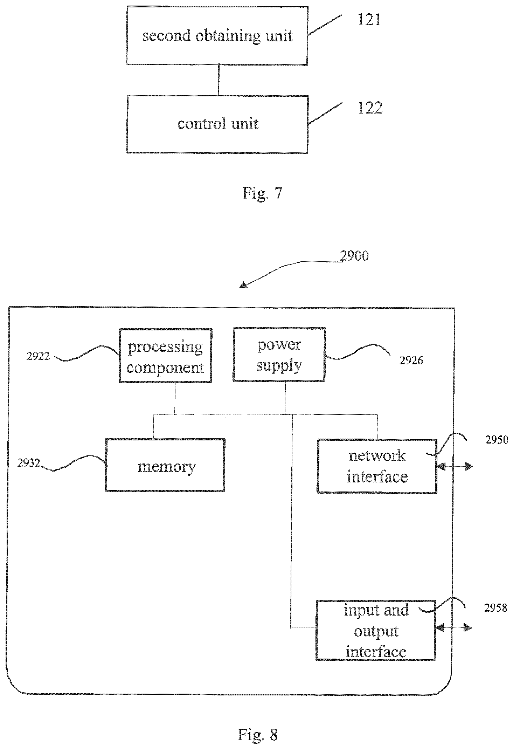

Referring to Fig. 7, the first control module 12 includes a second obtaining unit 121 and a control unit 122.

The second obtaining unit 121 is configured to obtain an identifier of the related terminal from a related database, in which the related database includesa a correspondence between an identifier of the target terminal and the identifier of the related terminal.

The control unit 122 is configured to control the related terminal corresponding to the identifier of the related terminal obtained by the second obtaining unit 121 to output the loss prompt.

The related terminal includes: a terminal on which a target account is logged in, in which the target account is the same as a logged-in account on the target terminal or an account associated with the logged-in account on the target terminal.

The loss prompt includes at least one of: current location information of the target terminal and facial feature information of the current user.

The first feature information includes at least one of: fingerprint feature information, iris feature information and voice feature information of the current user; and the second feature information includes at least one of: fingerprint feature information, iris feature information and voice feature information of the predetermined user.

Further, the device further includes a second control module.

The second control module is configured to control the target terminal to enable a current logged-in account to be logged out, in response to determining that the matching relation indicates that the first feature information and the second feature information do not match.

In embodiments of the present disclosure, the matching relation between the feature information of the current user of the target terminal and the feature information of the predetermined user of the target terminal is obtained, and in response to determining that the matching relation indicates a mismatching, the related terminal of the target terminal is controlled to output the loss prompt. With the method according to embodiments of the present disclosure, if the server determines that the current user is different from the predetermined user of the target terminal, it indicates that the target terminal may be lost, and it is necessary to control the related terminal of the target terminal to output the loss prompt so as to enable the owner of the target terminal to know the loss of the target terminal in time through the loss prompt outputted by the related terminal and to take corresponding actions as soon as possible, such as calling the police, finding the target terminal at once or modifying a password of a bank account stored in the target terminal at once or the like, such that more economic losses brought to the owner of the target terminal due to the loss of the target terminal may be avoided even though the target terminal is lost.

Fig. 8 is a block diagram of a server according to an example embodiment of the present disclosure. The server 2900 may be provided as a server.

Referring to Fig. 8, the server 2900 includes a processing component 2922 (including one or more processors), and memory resource represented by a memory 2932 for storing instructions (such as application program) executable by the processing component 2922. The application program stored in the memory 2932 may include one or more modules. Each module corresponds to a set of instructions. Furthermore, the processing component 2922 may be configured to execute instructions so as to execute the method on the server side.

The server 2900 may further include a power supply 2926 configured to manage the power of the server 2900, a wired or wireless network interface 2950 configured to connect the server 2900 to the network, an input and output interface 2958. The server 2900 may operate based on an operating system stored in the memory 2932, such as Windows ServerTM, Mac OS XTM, UnixTM, LinuxTM, FreeBSDTM and so on.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art, and that fall within the scope of the claims.

## Claims

1. A method carried out by a device for providing a prompt indicating a loss of a terminal, comprising:
obtaining (S101) a matching relation between first feature information of a current user of a target terminal and second feature information of an owner of the target terminal and
controlling (S102) a related terminal associated with the target terminal to output a loss prompt in response to determining that the matching relation indicates that the first feature information and the second feature information do not match, wherein the loss prompt indicates a loss of the target terminal; wherein the related terminal comprises: a terminal on which a target account of the owner of the target terminal is logged in, wherein the target account is the same as a logged-in account on the target terminal or an account associated with the logged-in account on the target terminal;
controlling the target terminal to enable the logged-in account to be logged out, in response to determining that the matching relation indicates that the first feature information and the second feature information do not match.

2. The method according to claim 1, wherein obtaining (S101) a matching relation between first feature information of a current user of a target terminal and second feature information of a predetermined user comprises:
receiving (S1011) the first feature information sent by the target terminal;
obtaining (S1012) the second feature information; and
obtaining (S1013) the matching relation by comparing the first feature information with the second feature information; and/or
wherein obtaining (S101) a matching relation between first feature information of a current user of a target terminal and second feature information of a predetermined user comprises:
receiving the matching relation sent by the target terminal.

3. The method according to claim 1 or 2, wherein the matching relation indicates that the first feature information and the second feature information do not match, if the second feature information does not comprise the first feature information.

4. The method according to any one of claims 1-3, wherein controlling (S102) a related terminal associated with the target terminal to output a loss prompt comprises:
obtaining (S1021) an identifier of the related terminal from a related database, wherein the related database comprises a correspondence between an identifier of the target terminal and the identifier of the related terminal; and
controlling (S1022) the related terminal corresponding to the identifier of the related terminal to output the loss prompt.

5. The method according to any one of claims 1-4,
wherein the loss prompt comprises at least one of: current location information of the target terminal and facial feature information of the current user.

6. The method according to any one of claims 1-5, wherein
the first feature information comprises at least one of: fingerprint feature information, iris feature information and voice feature information of the current user; and
the second feature information comprises at least one of: fingerprint feature information, iris feature information and voice feature information of the predetermined user.

7. A device for providing a prompt indicating a loss of a terminal, comprising:
an obtaining module (11), configured to obtain a matching relation between first feature information of a current user of a target terminal and second feature information of an owner of the target terminal and
a first control module (12), configured to control a related terminal associated with the target terminal to output a loss prompt in response to determining that the matching relation obtained by the obtaining module (11) indicates that the first feature information and the second feature information do not match, wherein the loss prompt indicates a loss of the target terminal; wherein the related terminal comprises: a terminal on which a target account of the owner of the target terminal is logged in, wherein the target account is the same as a logged-in account on the target terminal or an account associated with the logged-in account on the target terminal;
a second control module, configured to control the target terminal to enable the logged-in account to be logged out, in response to determining that the matching relation indicates that the first feature information and the second feature information do not match.

8. The device according to claim 7, wherein the obtaining module (11) comprises:
a first receiving unit (111), configured to receive the first feature information sent by the target terminal;
a first obtaining unit (112), configured to obtain the second feature information; and
a forming unit (113), configured to obtain the matching relation by comparing the first feature information received by the first receiving unit (111) with the second feature information obtained by the first obtaining unit (112); and/or
wherein the obtaining module (11) comprises:
a second receiving unit, configured to receive the matching relation sent by the target terminal.

9. The device according to claim 7 or 8, wherein the matching relation indicates that the first feature information and the second feature information do not match, if the second feature information obtained by the first obtaining unit does not comprise the first feature information received by the first receiving unit.

10. The device according to any one of claims 7-9, wherein the first control module (12) comprises:
a second obtaining unit (121), configured to obtain an identifier of the related terminal from a related database, wherein the related database comprises a correspondence between an identifier of the target terminal and the identifier of the related terminal; and
a control unit (122), configured to control the related terminal corresponding to the identifier of the related terminal obtained by the second obtaining unit (121) to output the loss prompt.

11. The device according to any one of claims 7-10,
wherein the loss prompt comprises at least one of: current location information of the target terminal and facial feature information of the current user; and/or
the first feature information comprises at least one of: fingerprint feature information, iris feature information and voice feature information of the current user, and
the second feature information comprises at least one of: fingerprint feature information, iris feature information and voice feature information of the predetermined user.

12. A computer-readable storage medium having stored therein instructions that, when executed by a processor of a device according to claims 7-11, causes the device to perform the method for providing a prompt indicating a loss of a terminal according to any one of claims 1-6.

## Patentansprüche

1. Verfahren, durchgeführt von einer Vorrichtung zum Bereitstellen einer sofortigen Anzeige, die einen Verlust eines Endgeräts angibt, umfassend:
Erhalten (S101) einer Übereinstimmungsbeziehung zwischen ersten Merkmalsinformationen eines momentanen Anwenders eines Zielendgeräts und zweiten Merkmalinformationen eines Eigentümers des Zielgeräts und
Steuern (S102) eines zugehörigen Endgeräts, das mit dem Zielendgerät verknüpft ist, um eine sofortige Verlustanzeige in Antwort auf eine Ermittlung auszugeben, dass die Übereinstimmungsbeziehung angibt, dass die ersten Merkmalinformationen und die zweiten Merkmalinformationen nicht übereinstimmen, wobei die sofortige Verlustanzeige einen Verlust des Zielendgeräts angibt; wobei das zugehörige Endgerät umfasst: ein Endgerät, auf dem ein Zielkonto des Eigentümers des Zielgeräts angemeldet ist, wobei das Zielkonto dasselbe ist wie das angemeldete Konto auf dem Zielendgerät oder ein Konto, das mit dem angemeldeten Konto auf dem Zielendgerät verknüpft ist;
Steuern des Zielendgeräts, um zu ermöglichen, dass das angemeldete Konto in Antwort auf eine Ermittlung, dass die Übereinstimmungsbeziehung angibt, dass die ersten Merkmalinformationen und die zweiten Merkmalinformationen nicht übereinstimmen, abgemeldet wird.

2. Verfahren nach Anspruch 1, wobei Erhalten (S101) einer Übereinstimmungsbeziehung zwischen ersten Merkmalinformationen eines momentanen Anwenders eines Zielendgeräts und zweiten Merkmalinformationen eines vorbestimmten Anwenders umfasst:
Empfangen (S1011) der ersten Merkmalinformationen, die vom Zielendgerät gesendet werden;
Erhalten (S1012) der zweiten Merkmalinformationen; und
Erhalten (S1013) der Übereinstimmungsbeziehung durch Vergleichen der ersten Merkmalinformationen mit den zweiten Merkmalinformationen; und/oder
wobei Erhalten (S101) einer Übereinstimmungsbeziehung zwischen ersten Merkmalinformationen eines momentanen Anwenders eines Zielendgeräts und zweiten Merkmalinformationen eines vorbestimmten Anwenders umfasst:
Empfangen der Übereinstimmungsbeziehung, die vom Zielendgerät gesendet wird.

3. Verfahren nach Anspruch 1 oder 2, wobei die Übereinstimmungsbeziehung angibt, dass die ersten Merkmalinformationen und die zweiten Merkmalinformationen nicht übereinstimmen, falls die zweiten Merkmalinformationen die ersten Merkmalinformationen nicht umfassen.

4. Verfahren nach einem der Ansprüche 1-3, wobei Steuern (S102) eines zugehören Endgeräts, das mit dem Zielendgerät verknüpft ist, eine sofortige Verlustanzeige auszugeben, umfasst:
Erhalten (S1021) einer Kennung des zugehörigen Endgeräts von einer zugehörigen Datenbank, wobei die zugehörige Datenbank eine Entsprechung zwischen einer Kennung des Zielendgeräts und der Kennung des zugehörigen Endgeräts umfasst; und
Steuern (S1022) des zugehörigen Endgeräts, entsprechend der Kennung des zugehörigen Endgeräts, um die sofortige Verlustanzeige auszugeben.

5. Verfahren nach einem der Ansprüche 1-4,
wobei die sofortige Verlustanzeige mindestens eines umfasst von: momentanen Standortinformationen des Zielendgeräts und Gesichtsmerkmalinformationen des momentanen Anwenders.

6. Verfahren nach einem der Ansprüche 1-5, wobei
die ersten Merkmalinformationen mindestens eines umfassen von: Fingerabdruckmerkmalinformationen, Irismerkmalinformationen und Stimmmerkmalinformationen des momentanen Anwenders; und
die zweiten Merkmalinformationen mindestens eines umfassen von: Fingerabdruckmerkmalinformationen, Irismerkmalinformationen und Stimmmerkmalinformationen des vorbestimmten Anwenders.

7. Vorrichtung zum Bereitstellen einer sofortigen Anzeige, die einen Verlust eines Endgeräts angibt, umfassend:
ein Erhaltungsmodul (11), das konfiguriert ist, eine Übereinstimmungsbeziehung zwischen ersten Merkmalinformationen eines momentanen Anwenders eines Zielendgeräts und zweiten Merkmalinformationen eines Eigentümers des Zielendgeräts zu erhalten und
ein erstes Steuermodul (12), das konfiguriert ist, ein zugehöriges Endgerät zu steuern, das mit dem Zielendgerät verknüpft ist, um eine sofortige Verlustanzeige in Antwort auf eine Ermittlung auszugeben, dass die Übereinstimmungsbeziehung, die vom Erhaltungsmodul (11) erhalten wird, angibt, dass die ersten Merkmalinformationen und die zweiten Merkmalinformationen nicht übereinstimmen, wobei die sofortige Verlustanzeige einen Verlust des Zielendgeräts angibt; wobei das zugehörige Endgerät umfasst: ein Endgerät, auf dem ein Zielkonto des Eigentümers des Zielendgeräts angemeldet ist, wobei das Zielkonto dasselbe ist wie ein angemeldetes Konto auf dem Zielendgerät oder ein Konto, das mit dem angemeldeten Konto auf dem Zielendgerät verknüpft ist;
ein zweites Steuermodul, das konfiguriert ist, das Zielendgerät zu steuern, um zu ermöglichen, dass das angemeldete Konto in Antwort auf eine Ermittlung, dass die Übereinstimmungsbeziehung angibt, dass die ersten Merkmalinformationen und die zweiten Merkmalinformationen nicht übereinstimmen, abgemeldet wird.

8. Vorrichtung nach Anspruch 7, wobei das Erhaltungsmodul (11) umfasst:
eine erste Empfangseinheit (111), die konfiguriert ist, die ersten Merkmalinformationen zu empfangen, die vom Zielendgerät gesendet werden;
eine erste Erhaltungseinheit (112), die konfiguriert ist, die zweiten Merkmalinformationen zu erhalten; und
eine Bildungseinheit (113), die konfiguriert ist, die Übereinstimmungsbeziehung durch Vergleichen der ersten Merkmalinformationen, die von der ersten Empfangseinheit (111) empfangen werden, mit den zweiten Merkmalinformationen, die von der ersten Erhaltungseinheit (112) erhalten werden, zu erhalten; und/oder
wobei das Erhaltungsmodul (11) umfasst:
eine zweite Empfangseinheit, die konfiguriert ist, die Übereinstimmungsbeziehung zu empfangen, die vom Zielendgerät gesendet wird.

9. Vorrichtung nach Anspruch 7 oder 8, wobei die Übereinstimmungsbeziehung angibt, dass die ersten Merkmalinformationen und die zweiten Merkmalinformationen nicht übereinstimmen, falls die zweiten Merkmalinformationen, die von der ersten Erhaltungseinheit erhalten werden, nicht die ersten Merkmalinformationen umfassen, die von der ersten Empfangseinheit empfangen werden.

10. Vorrichtung nach einem der Ansprüche 7-9, wobei das erste Steuermodul (12) umfasst:
eine zweite Erhaltungseinheit (121), die konfiguriert ist, eine Kennung des zugehörigen Endgeräts von einer zugehörigen Datenbank zu erhalten, wobei die zugehörige Datenbank eine Entsprechung zwischen einer Kennung des Zielendgeräts und der Kennung des zugehörigen Endgeräts umfasst; und
eine Steuereinheit (122), die konfiguriert ist, das zugehörige Endgerät entsprechend der Kennung des zugehörigen Endgeräts zu steuern, die von der zweiten Erhaltungseinheit (121) erhalten wird, um die sofortige Verlustanzeige auszugeben.

11. Vorrichtung nach einem der Ansprüche 7-10,
wobei die sofortige Verlustanzeige mindestens eines umfasst von: momentanen Standortinformationen des Zielendgeräts und Gesichtsmerkmalinformationen des momentanen Anwenders; und/oder
die ersten Merkmalinformationen mindestens eines umfassen von: Fingerabdruckmerkmalinformationen, Irismerkmalinformationen und Stimmmerkmalinformationen des momentanen Anwenders; und
die zweiten Merkmalinformationen mindestens eines umfassen von: Fingerabdruckmerkmalinformationen, Irismerkmalinformationen und Stimmmerkmalinformationen des vorbestimmten Anwenders.

12. Computerlesbares Speichermedium, das darauf gespeicherte Befehle aufweist, die, wenn von einem Prozessor einer Vorrichtung nach einem der Ansprüche 7-11 ausgeführt, die Vorrichtung veranlassen, das Verfahren zum Bereitstellen einer sofortigen Anzeige, die einen Verlust eines Endgeräts angibt, nach einem der Ansprüche 1-6 durchzuführen.

## Revendications

1. Procédé mis en oeuvre par un dispositif pour la fourniture d'un message-guide indiquant une perte d'un terminal, comprenant :
l'obtention (S101) d'une relation de concordance entre des premières informations relatives à des caractéristiques d'un utilisateur actuel d'un terminal cible et des secondes informations relatives à des caractéristiques d'un propriétaire du terminal cible ; et
la commande (S102) à un terminal connexe associé au terminal cible d'émettre un message-guide de perte en réponse à la détermination du fait que la relation de concordance indique que les premières informations relatives à des caractéristiques et les secondes informations relatives à des caractéristiques ne concordent pas, le message-guide de perte indiquant une perte du terminal cible ; dans lequel le terminal connexe comprend : un terminal sur lequel un compte cible du propriétaire du terminal cible est connecté, le compte cible étant le même qu'un compte connecté sur le terminal cible ou un compte associé au compte connecté sur le terminal cible ;
la commande au terminal cible de permettre au compte connecté d'être déconnecté, en réponse à la détermination du fait que la relation de concordance indique que les premières informations relatives à des caractéristiques et les secondes informations relatives à des caractéristiques ne concordent pas.

2. Procédé selon la revendication 1, dans lequel l'obtention (S101) d'une relation de concordance entre des premières informations relatives à des caractéristiques d'un utilisateur actuel d'un terminal cible et des secondes informations relatives à des caractéristiques d'un utilisateur prédéterminé comprend :
la réception (S1011) des premières informations relatives à des caractéristiques envoyées par le terminal cible ;
l'obtention (S1012) des secondes informations relatives à des caractéristiques ; et
l'obtention (S1013) de la relation de concordance en comparant les premières informations relatives à des caractéristiques avec les secondes informations relatives à des caractéristiques ; et/ou
dans lequel l'obtention (S101) d'une relation de concordance entre des premières informations relatives à des caractéristiques d'un utilisateur actuel d'un terminal cible et des secondes informations relatives à des caractéristiques d'un utilisateur prédéterminé comprend :
la réception de la relation de concordance envoyée par le terminal cible.

3. Procédé selon les revendications 1 ou 2, dans lequel la relation de concordance indique que les premières informations relatives à des caractéristiques et les secondes informations relatives à des caractéristiques ne concordent pas, si les secondes informations relatives à des caractéristiques ne comprennent pas les premières informations relatives à des caractéristiques.

4. Procédé selon l'une quelconque des revendications 1 à 3, dans lequel la commande (S102) à un terminal connexe associé au terminal cible d'émettre un message-guide de perte comprend :
l'obtention (S1021) d'un identifiant du terminal connexe auprès d'une base de données connexe, la base de données connexe comprenant une correspondance entre un identifiant du terminal cible et l'identifiant du terminal connexe ; et
la commande (S1022) au terminal connexe correspondant à l'identifiant du terminal connexe d'émettre le message-guide de perte.

5. Procédé selon l'une quelconque des revendications 1 à 4,
dans lequel le message-guide de perte comprend au moins un des éléments suivants : des informations sur l'emplacement actuel du terminal cible et des informations relatives à des caractéristiques faciales de l'utilisateur actuel.

6. Procédé selon l'une quelconque des revendications 1 à 5, dans lequel
les premières informations relatives à des caractéristiques comprennent au moins un des éléments suivants : des informations relatives à des caractéristiques d'empreintes digitales, des informations relatives à des caractéristiques d'iris et des informations relatives à des caractéristiques vocales de l'utilisateur actuel ; et
les secondes informations relatives à des caractéristiques comprennent au moins un des éléments suivants : des informations relatives à des caractéristiques d'empreintes digitales, des informations relatives à des caractéristiques d'iris et des informations relatives à des caractéristiques vocales de l'utilisateur prédéterminé.

7. Dispositif pour la fourniture d'un message-guide indiquant une perte d'un terminal, comprenant :
un module d'obtention (11), configuré pour obtenir une relation de concordance entre des premières informations relatives à des caractéristiques d'un utilisateur actuel d'un terminal cible et des secondes informations relatives à des caractéristiques d'un propriétaire du terminal cible ; et
un premier module de commande (12), configuré pour commander à un terminal connexe associé au terminal cible d'émettre un message-guide de perte en réponse à la détermination du fait que la relation de concordance obtenue par le module d'obtention (11) indique que les premières informations relatives à des caractéristiques et les secondes informations relatives à des caractéristiques ne concordent pas, le message-guide de perte indiquant une perte du terminal cible ; dans lequel le terminal connexe comprend : un terminal sur lequel un compte cible du propriétaire du terminal cible est connecté, le compte cible étant le même qu'un compte connecté sur le terminal cible ou un compte associé au compte connecté sur le terminal cible ;
un second module de commande, configuré pour commander au terminal cible de permettre au compte connecté d'être déconnecté, en réponse à la détermination du fait que la relation de concordance indique que les premières informations relatives à des caractéristiques et les secondes informations relatives à des caractéristiques ne concordent pas.

8. Dispositif selon la revendication 7, dans lequel le module d'obtention (11) comprend :
une première unité de réception (111), configurée pour recevoir les premières informations relatives à des caractéristiques envoyées par le terminal cible ;
une première unité d'obtention (112), configurée pour obtenir les secondes informations relatives à des caractéristiques ; et
une unité de formation (113), configurée pour obtenir la relation de concordance en comparant les premières informations relatives à des caractéristiques reçues par la première unité de réception (111) avec les secondes informations relatives à des caractéristiques obtenues par la première unité d'obtention (112) ; et/ou
dans lequel le module d'obtention (11) comprend :
une seconde unité de réception, configurée pour recevoir la relation de concordance envoyée par le terminal cible.

9. Dispositif selon les revendications 7 ou 8, dans lequel la relation de concordance indique que les premières informations relatives à des caractéristiques et les secondes informations relatives à des caractéristiques ne concordent pas, si les secondes informations relatives à des caractéristiques obtenues par la première unité d'obtention ne comprennent pas les premières informations relatives à des caractéristiques reçues par la première unité de réception.

10. Dispositif selon l'une quelconque des revendications 7 à 9, dans lequel le premier module de commande (12) comprend :
une seconde unité d'obtention (121), configurée pour obtenir un identifiant du terminal connexe auprès d'une base de données connexe, la base de données connexe comprenant une correspondance entre un identifiant du terminal cible et l'identifiant du terminal connexe ; et
une unité de commande (122), configurée pour commander au terminal connexe correspondant à l'identifiant du terminal connexe obtenu par la seconde unité d'obtention (121) d'émettre le message-guide de perte.

11. Dispositif selon l'une quelconque des revendications 7 à 10,
dans lequel le message-guide de perte comprend au moins un des éléments suivants : des informations sur l'emplacement actuel du terminal cible et des informations relatives à des caractéristiques faciales de l'utilisateur actuel ; et/ou
les premières informations relatives à des caractéristiques comprennent au moins un des éléments suivants : des informations relatives à des caractéristiques d'empreintes digitales, des informations relatives à des caractéristiques d'iris et des informations relatives à des caractéristiques vocales de l'utilisateur actuel, et
les secondes informations relatives à des caractéristiques comprennent au moins un des éléments suivants : des informations relatives à des caractéristiques d'empreintes digitales, des informations relatives à des caractéristiques d'iris et des informations relatives à des caractéristiques vocales de l'utilisateur prédéterminé.

12. Support d'enregistrement lisible par ordinateur sur lequel sont enregistrées des instructions qui, lorsqu'elles sont exécutées par un processeur d'un dispositif selon les revendications 7 à 11, amènent le dispositif à effectuer le procédé de fourniture d'un message-guide indiquant une perte d'un terminal selon l'une quelconque des revendications 1 à 6.
